# EUROPEAN PATENT APPLICATION

(11) **EP 4 541 841 A1**
(43) Date of publication of application: **23.04.2025**
(21) Application number: 24195571.5
(22) Date of filing: 21.08.2024
(51) Int. Cl.: C08J 5/18, C08J 7/04, C09D 183/04, G03G 15/16

(54) **FILM, TRANSFER DEVICE, FIXING DEVICE, AND IMAGE FORMING APPARATUS**

(30) Priority: 20.10.2023 JP 2023181454
(71) Applicant: Fujifilm Business Innovation Corp., Tokyo 107-0052 (JP)
(72) Inventor: KUBOTA, Ryosuke, Ebina (JP); NISHIMURA, Iori, Ebina (JP); KIMURA, Jun, Ebina (JP); KINUTA, Yasuhiko, Ebina (JP)
(74) Representative: Meissner Bolte Partnerschaft mbB

(57) **Abstract**

A film includes a fluorine-free material and has a peel strength (kPa) from a fixed resin of (A) at 25°C and (B) at 200°C satisfying that (A) is 0 kPa or more and 20 kPa or less and (B - A) is 10 kPa or less.

## Description

### Background

### (i) Technical Field

The present disclosure relates to a film, a transfer device, a fixing device, and an image forming apparatus.

### (ii) Related Art

In electrophotographic image forming apparatuses (such as copiers, facsimiles, and printers), a toner image formed on a surface of an image holding member is transferred onto a surface of a recording medium and fixed to the recording medium to form an image.

To form high-quality images, it is necessary that a transfer member or a fixing member be readily separated from a recording medium in a transferring or fixing step.

PFA (tetrafluoroethylene-perfluoroalkyl vinyl ether copolymer) is a fluorine material having releasability at high temperature and is widely used as a material for surface layers of fixing members (see, for example, Japanese Unexamined Patent Application Publication No. 2021-165773).

### Summary

Accordingly, it is an object of the present disclosure to provide a film that includes a fluorine-free material and can maintain high releasability even after use under repeated heating in comparison with a film having a peel strength (kPa) from a fixed resin of (A) at 25°C and (B) at 200°C satisfying that (A) is more than 20 kPa or (B - A) is more than 10 kPa.

According to a first aspect of the present disclosure, there is provided a film including a fluorine-free material and having a peel strength (kPa) from a fixed resin of (A) at 25°C and (B) at 200°C satisfying that (A) is 0 kPa or more and 20 kPa or less and (B - A) is 10 kPa or less.

According to a second aspect of the present disclosure, in the film according to the first aspect, the fluorine-free material includes at least a dendrimer or a compound having a structure A represented by formula: [RSiO_{1.5}]ₙ (wherein, in the formula, R represents an organic group, and n represents an integer of 2 or more).

According to a third aspect of the present disclosure, in the film according to the second aspect, the content of the dendrimer or the compound having the structure A is 3 parts by mass or more.

According to a fourth aspect of the present disclosure, in the film according to the second aspect, the content of the dendrimer or the compound having the structure A is 6 parts by mass or more.

According to a fifth aspect of the present disclosure, the film according to the first aspect includes an elastic layer.

According to a sixth aspect of the present disclosure, in the film according to the fifth aspect, the ratio of the tensile elastic modulus (N/m²) of the film at 25°C to the tensile elastic modulus (N/m²) of the elastic layer at 25°C (the tensile elastic modulus (N/m²) of the film at 25°C / the tensile elastic modulus (N/m²) of the elastic layer at 25°C) is 10 or more and 3,000 or less.

According to a seventh aspect of the present disclosure, there is provided a fixing device including: a first rotatable member; and a second rotatable member disposed in contact with an outer surface of the first rotatable member,
wherein at least one of the first rotatable member and the second rotatable member includes the film according to the sixth aspect disposed thereon.

According to an eighth aspect of the present disclosure, there is provided an image forming apparatus including:
an image holding member;
a charging device that charges a surface of the image holding member;
an electrostatic latent image forming device that forms an electrostatic latent image on the charged surface of the image holding member;
a developing device that houses a developer containing a toner and develops the electrostatic latent image formed on the surface of the image holding member with the developer to thereby form a toner image;
a transfer device that transfers the toner image onto a surface of a recording medium; and
the fixing device according to the seventh aspect, the fixing device fixing the toner image to the surface of the recording medium.

According to a ninth aspect of the present disclosure, there is provided a transfer device including:
an intermediate transfer body including the film according to the sixth aspect and having an outer circumferential surface onto which a toner image is to be transferred;
a first transfer unit that first-transfers a toner image formed on a surface of an image holding member onto the outer circumferential surface of the intermediate transfer body; and
a second transfer unit that second-transfers the toner image transferred onto the outer circumferential surface of the intermediate transfer body onto a surface of a recording medium.

According to a tenth aspect of the present disclosure, there is provided an image forming apparatus including:
an image holding member;
a charging device that charges a surface of the image holding member;
an electrostatic latent image forming device that forms an electrostatic latent image on the charged surface of the image holding member;
a developing device that houses a developer containing a toner and develops the electrostatic latent image formed on the surface of the image holding member with the developer to thereby form a toner image;
the transfer device according to the ninth aspect, the transfer device transferring the toner image onto a surface of a recording medium; and
a fixing device that fixes the toner image to the surface of the recording medium.

The film according to the first aspect of the disclosure includes the fluorine-free material and can maintain high releasability even after use under repeated heating, in comparison with a film having a peel strength (kPa) from a fixed resin of (A) at 25°C and (B) at 200°C satisfying that (A) is more than 20 kPa or (B - A) is more than 10 kPa.

The film according to the second aspect of the disclosure can maintain high releasability even after use under repeated heating in comparison with a film that does not contain the dendrimer or the compound having the structure A represented by formula: [RSiO_{1.5}]ₙ (in the formula, R represents an organic group, and n represents an integer of 2 or more).

The film according to the third aspect of the disclosure can maintain high releasability even after use under repeated heating in comparison with a film in which the content of the dendrimer or the compound having the structure A is less than 3 parts by mass.

The film according to the fourth aspect of the disclosure can maintain high releasability even after use under repeated heating in comparison with a film in which the content of the dendrimer or the compound having the structure A is less than 6 parts by mass.

The elastic layer-attached film according to the fifth aspect of the disclosure has higher flexibility than a film including no elastic layer.

The elastic layer-attached film according to the sixth aspect of the disclosure can maintain high releasability even after use under repeated heating in comparison with an elastic layer-attached film in which the ratio of the tensile elastic modulus (N/m²) of the film at 25°C (N/m²) to the tensile elastic modulus (N/m²) of the elastic layer at 25°C (N/m²) (the tensile elastic modulus (N/m²) of the film at 25°C / the tensile elastic modulus (N/m²) of the elastic layer at 25°C) is less than 10 or more than 3,000.

In the fixing device according to the seventh aspect of the disclosure and the image forming apparatus according to the eighth aspect each including the rotatable member including the elastic layer-attached film including the fluorine-free material and in the transfer device according to the ninth aspect and the image forming apparatus according to the tenth aspect each including the intermediate transfer body including the elastic layer-attached film including the fluorine-free material, the elastic layer-attached film can maintain high releasability even after use under repeated heating in comparison with an elastic layer-attached film having a peel strength (kPa) from a fixed resin of (A) at 25°C and (B) at 200°C satisfying that (A) is more than 20 kPa or (B - A) is more than 10 kPa.

### Brief Description of the Drawings

Exemplary embodiments of the present disclosure will be described in detail based on the following figures, wherein:
Fig. 1 is a schematic illustration showing an example of a first exemplary embodiment of a fixing device in an exemplary embodiment;
Fig. 2 is a schematic illustration showing an example of a second exemplary embodiment of the fixing device in the exemplary embodiment;
Fig. 3 is a schematic illustration showing an example of a third exemplary embodiment of the fixing device in the exemplary embodiment; and
Fig. 4 is a schematic illustration showing an example of an image forming apparatus in the exemplary embodiment.

### Detailed Description

Exemplary embodiments of the present disclosure will be described below. The description and Examples are illustrative of the exemplary embodiments and are not intended to limit the scope of the present disclosure.

In the present description, a numerical range represented using "to" means a range including the numerical values before and after the "to" as the minimum value and the maximum value, respectively.

In a set of numerical ranges expressed in a stepwise manner in an exemplary embodiment, the upper or lower limit in one numerical range may be replaced with the upper or lower limit in another numerical range in the set. Moreover, in a numerical range described in an exemplary embodiment, the upper or lower limit in the numerical range may be replaced with a value indicated in an Example.

In the present description, the term "step" is meant to include not only an independent step but also a step that is not clearly distinguished from other steps, so long as the prescribed purpose of the step can be achieved.

In the present description, when an exemplary embodiment is explained with reference to the drawings, the structure of the exemplary embodiment is not limited to the structures shown in the drawings. In the drawings, the sizes of the components are conceptual, and the relative relations between the components are not limited to those shown in the drawings.

In the present description, any component may contain a plurality of materials corresponding to the component. When reference is made to the amount of a component in a composition in an exemplary embodiment, if the composition contains a plurality of materials corresponding to the component, the amount means the total amount of the plurality of materials in the composition, unless otherwise specified.

In the present description, the term "fluorine-free material" means a "material containing no fluorine atom."

### <Film>

A film in an exemplary embodiment is a film including a fluorine-free material and having a peel strength (kPa) from a fixed resin of (A) at 25°C and (B) at 200°C satisfying that (A) is 0 kPa or more and 20 kPa or less and (B - A) is 10 kPa or less.

The film in the present exemplary embodiment has the structure described above and can therefore maintain high releasability even after use under repeated heating. The reason for this may be as follow.

The peel strength (A) (kPa) of the film in the present exemplary embodiment from a fixed resin at 25°C is 0 kPa or more and 20 kPa or less. Therefore, the film in the present exemplary embodiment exhibits good releasability from a fixed resin at 25°C.

The peel strength (B) (kPa) of the film in the present exemplary embodiment from a fixed resin at 200°C is not largely different from the peel strength (A) (kPa) at 25°C. Therefore, the film in the present exemplary embodiment exhibits good releasability from a fixed resin even at 200°C.

It is therefore inferred that the film in the present exemplary embodiment can maintain high releasability even after use under repeated heating.

Moreover, it is inferred that, when the film in the present exemplary embodiment is used for an image forming apparatus, the quality of images obtained is improved.

The details of the film in the present exemplary embodiment will be described.

The peel strength (kPa) of the film in the present exemplary embodiment from a fixed resin at 25°C is denoted as (A), and the peel strength at 200°C is denoted as (B). Then (A) is 0 kPa or more and 20 kPa or less, and (B - A) is 10 kPa or less.

Since the peel strength of the film from a fixed resin at 25°C and the peel strength at 200°C are within the above ranges, the film can maintain high releasability even after use under repeated heating. The peel strength of the film from a fixed resin at 25°C is preferably 0 kPa or more and 20 kPa or less, more preferably 0 kPa or more and 15 kPa or less, and still more preferably 0 kPa or more and 10 kPa or less. (B - A) is preferably 0 kPa or more and 10 kPa or less and more preferably 0 kPa or more and 5 kPa or less.

The peel strengths (kPa) of the film at 25°C and 200°C can be measured as follows.

First, an A4 paper sheet P (manufactured by FUJIFILM Business Innovation Corp.) is prepared, and a copier (ApeosPort-V C3375) manufactured by FUJIFILM Business Innovation Corp. is used to prepare a test paper sheet including an image outputted on its entire surface. A 10 mm × 10 mm square test piece is cut from a film used for the measurement.

Next, the test piece is applied to a probe of a tack tester (TA-500 manufactured by UBM) held at room temperature (25°C) or heated in advance to 200°C. Specifically, the elastic layer side of the film is applied to the probe. Then the test piece is moved toward the test paper sheet at a speed of 0.1 mm/s and pressed against the image surface of the test paper sheet. The pressed test piece is held at a pressing load of 5.0 kgf/cm² for 10 seconds and then pulled up at a pulling speed of 10 mm/s, and the peel strength in this case is measured.

The resin forming the image is a fixed resin. The fixed resin is a polyester resin and is a polycondensed product of dimethyl fumarate, which is a dicarboxylic acid, and propylene glycol, which is a diol, and resin particles having a weight average molecular weight of 25000 and an average particle diameter of 4.7 µm are used.

To allow the film to maintain releasability even after use under repeated heating, the film may contain a dendrimer or a compound having a structure A represented by formula: [RSiO_{1.5}]ₙ (in the formula, R represents an organic group, and n represents an integer of 2 or more).

The compound having the structure A is a compound having the structure A represented by formula: [RSiO_{1.5}]ₙ (in the formula, R represents an organic group, and n represents an integer of 2 or more), and at least one R in the structure A has a group including an alkyl group.

In the structure A, the organic group represented by R in the formula represents, for example, a hydroxy group, a siloxy group, a hydrocarbon group, a hydrocarbon group in which one or a plurality of methylene groups are each replaced with a carbonyl group, a hydrocarbon group in which one or a plurality of carbon atoms are each replaced with a heteroatom (an oxygen atom, a nitrogen atom, or a sulfur atom), or a group obtained by combining any of the above groups.

Examples of the siloxy group described for the organic group represented by R include monoalkylsiloxy groups, dialkylsiloxy groups, and trialkylsiloxy groups. The siloxy group is preferably a dialkylsiloxy group or a trialkylsiloxy group and more preferably a trialkylsiloxy group.

Examples of the hydrocarbon group described for the organic group represented by R include aliphatic hydrocarbon groups and aromatic hydrocarbon groups.

Examples of the aliphatic hydrocarbon group include linear, branched, or alicyclic saturated aliphatic hydrocarbon groups and linear, branched, or alicyclic unsaturated aliphatic hydrocarbon groups.

The aliphatic hydrocarbon group is preferably a hydrocarbon group having 1 to 20 carbon atoms and more preferably a hydrocarbon group having 1 to 15 carbon atoms.

The aliphatic hydrocarbon group may be substituted with a substituent such as a halogen atom, a hydroxy group, an amino group, or an aryl group.

The aromatic hydrocarbon group may be a hydrocarbon group having 6 to 18 carbon atoms (preferably having 6 to 14 carbon atoms). Examples of the aromatic hydrocarbon group include a phenyl group, a naphthyl group, and an anthracenyl group.

The aromatic hydrocarbon group may be substituted with a substituent such as a halogen atom, a hydroxy group, an amino group, an alkyl group, or an alkoxy group.

The organic group represented by R may have a reactive group. Examples of the reactive group include a vinyl group, an allyl group, a styryl group, a maleimide group, an epoxy group, and a (meth)acryloyl group.

The plurality of R's present in the structure A may be the same organic group or may be different organic groups.

The siloxane compound is a high-molecular compound called silsesquioxane (SQ) and having any of various skeleton structures.

The skeleton structure of the siloxane compound may be a cage structure (a complete cage structure or an incomplete cage structure), a ladder structure, or a random structure.

In the structure A, n in the formula represents an integer of 2 or more. From the viewpoint that the siloxane compound can easily have a bulky structure and that the wettability of the film is reduced so that the film can easily exhibit releasability even at high temperature, n represents preferably an integer of 8 or more and more preferably an integer of 8 or more and 10,000 or less.

The dendrimer may be a siloxane dendrimer. Examples of the siloxane dendrimer include an (acrylates/polytrimethylsiloxymethacrylate) copolymer. The siloxane dendrimer can be purchased from Dow Corning Toray Co., Ltd.

The dendrimer used may be a dendrimer other than the siloxane dendrimer.

Examples of the dendrimer other than the siloxane dendrimer include a single dendritic polymer having three layer structure including a central core, dendrons regularly branched from the core, and an exterior surface layer.

To construct the regularly branched portions, a polyfunctional compound is used, and examples thereof include 1,3,5-trisubstituted benzenes.

The dendrimer other than the siloxane dendrimer is synthesized, for example, by a divergent method in which a polyfunctional compound such as a 1,3,5-trisubstituted benzene is used to synthesize the dendrimer from the central core toward the outside, or a convergent method in which the dendrimer is synthesized from the outer shell toward the core.

From the viewpoint of improving the releasability, the content of the siloxane dendrimer or the compound having the structure A represented by formula: [RSiO_{1.5}]ₙ (in the formula, R represents an organic group, and n represents an integer of 2 or more) with respect to the mass of the film is preferably 3% by mass or more and more preferably 6% by mass or more.

From the viewpoint of the film formability etc., the upper limit of the content with respect to the mass of the film is preferably 50% by mass or less and more preferably 20% by mass or less. When the upper limit of the content is within the above range, the quality of images obtained when the film is used for a fixing member or a transfer member of an image forming apparatus can be easily improved.

The film may further include a binder resin and an optional additive, in addition to the siloxane dendrimer or the compound having the structure A represented by formula: [RSiO_{1.5}]ₙ (in the formula, R represents an organic group, and n represents an integer of 2 or more).

Examples of the binder resin include polyimide resins (PI resins), polyamide-imide resins (PAI resins), polyether ketone resins (such as aromatic polyether ether ketone resins), polyphenylene sulfide resins (PPS resins), polyetherimide resins (PEI resins), polyester resins, polystyrene resins, polyamide resins, polycarbonate resins, polyethylene terephthalate resins (PET resins), and resin mixtures thereof.

Other examples of the binder resin include chloroprene rubber, epichlorohydrin rubber, isoprene rubber, butyl rubber, polyurethane, silicone rubber, fluorocarbon rubber, styrene-butadiene rubber, butadiene rubber, nitrile rubber (NBR), ethylene propylene rubber, ethylene-propylene-diene ternary copolymer rubber, natural rubber, and rubber mixtures thereof.

From the viewpoint of improving the releasability of the film, the binder resin may be a thermosetting silicone resin. Examples of the thermosetting silicone resin include pure silicone resins, silicone alkyd resins, silicone epoxy resins, silicone polyester resins, silicone acrylic resins, silicone phenolic resins, silicone urethane resins, and silicone melamine resins.

The content of the binder resin in the film is preferably 50% by mass or more and 90% by mass or less, more preferably 60% by mass or more and 90% by mass or less, and still more preferably 70% by mass or more and 90% by mass or less.

The optional additive is selected according to the application of the film, and examples thereof include well-known additives such as a conducting agent, a reinforcing agent, an antioxidant, a surfactant, and a heat-resistant antioxidant.

The conducing agent, which is a typical additive, will be described.

Examples of the conducing agent include carbon black, metals (such as aluminum and nickel), metal oxides (such as yttrium oxide and tin oxide), carbon nanotubes, ionic conductive materials (such as potassium titanate and LiCl). Of these, carbon black may be used.

One of these conducing agents may be used alone, or a combination or two or more may be used.

Examples of the carbon black include Ketjen black, oil furnace black, channel black (i.e., gas black), and acetylene black. The carbon black used may be carbon black subjected to surface treatment (which hereinafter may be referred to as "surface-treated carbon black").

The surface-treated carbon blackis obtained by adding a carboxy group, a quinone group, a lactone group, a hydroxy group, etc. to the surface of carbon black. Examples of the surface treatment method include an air oxidation method in which carbon black is brought into contact with air in a high-temperature atmosphere to react therewith, a method in which carbon black is allowed to react with nitrogen oxide or ozone at room temperature (e.g., 22°C), and a method in which carbon black is oxidized with air in a high-temperature atmosphere and then oxidized with ozone at low temperature.

In particular, the conducing agent is preferably channel black and particularly preferably acidic carbon black having a pH of 5.0 or less.

The acidic carbon black may be carbon black subjected to surface oxidation treatment, and examples thereof include carbon black with a carboxyl group, a quinone group, a lactone group, a hydroxy group, etc. added to the surface thereof.

From the viewpoint of improving transferability onto non-smooth paper sheets, the pH of the acidic carbon black is preferably 4.5 or less, more preferably 4.0 or less, still more preferably 3.0 or less, particularly preferably 2.0 or more and 3.0 or less, and most preferably 2.0 or more and 2.8 or less.

The pH of the acidic carbon black is a value measured by a pH measurement method defined in JIS Z8802 (2011).

The content of the conducing agent in the film is preferably 5% by mass or more and 30% by mass or less, more preferably 10% by mass or more and 30% by mass or less, and still more preferably 15% by mass or more and 30% by mass or less.

From the viewpoint of allowing an elastic layer-attached film having an elastic layer described later to have flexibility, the tensile elastic modulus (N/m²) of the film at 25°C (N/m²) is preferably 1 N/m² or more and 1,000 N/m² or less and more preferably 5 N/m² or more and 300 N/m² or less.

The tensile elastic modulus of the film can be measured as follows.

A 2 mm × 30 mm test piece is cut from the film. The opposite longitudinal edges of the test piece are held by upper and lower chucks of a tensile tester (AUTOGRAPH AG-1S tester manufactured by Shimadzu Corporation) such that the distance between the chucks is 20 mm. Then the test piece is pulled in the longitudinal direction at a tensile rate of 100 mm/minute in an environment at a temperature of 25°C and a relative humidity of 50%, and the tensile elastic modulus (N/m²) at 25°C is computed from the gradient of the initial linear portion of the obtained stress-strain curve.

No particular limitation is imposed on the thickness of the film so long as the effects of the present exemplary embodiment are not impaired. The thickness may be, for example, 0.01 mm or more and 10 mm or less.

### (Elastic layer-attached film)

From a practical point of view, the film may be an elastic layer-attached film including an elastic layer (which may be referred to also as an elastic layer-attached film in the present exemplary embodiment).

### (Elastic layer)

The elastic layer may contain an elastic material, a conducing agent, and an optional additive other than the conducing agent.

Examples of the elastic material include isoprene rubber, chloroprene rubber, epichlorohydrin rubber, butyl rubber, polyurethane, silicone rubber, fluorocarbon rubber, styrene-butadiene rubber, butadiene rubber, nitrile rubber, ethylene propylene rubber, epichlorohydrin-ethylene oxide copolymer rubber, epichlorohydrin-ethylene oxide-allyl glycidyl ether copolymer rubber, ethylene-propylene-diene ternary copolymer rubber (EPDM), acrylonitrile-butadiene copolymer rubber (NBR), natural rubber, and rubber blends thereof. In particular, polyurethane, silicone rubber, EPDM, epichlorohydrin-ethylene oxide copolymer rubber, NBR, and rubber blends thereof may be used. These elastic materials may be foamed products or may be non-foamed products.

The content of the elastic material is the amount of the main component of the elastic layer. The amount of the main component of the elastic layer means the amount of a component contained in the largest amount in the elastic layer.

Examples of the conducing agent include those shown as the examples of the conducing agent for the film.

No particular limitation is imposed on the amount of the conducing agent added. The amount of the conducing agent added is preferably in the range of 1% by mass or more and 50% by mass or less and more preferably in the range of 10% by mass or more and 30% by mass or less based on 100% by mass of the elastic material.

Examples of the optional additive other than the conducing agent include those shown as the examples for the film.

The content of the optional additive other than the conducing agent is, for example, 0.1 parts by mass or more and 10 parts by mass or less based on 100 parts by mass of the elastic material.

From the viewpoint of allowing the elastic layer-attached film including the above-described film and the elastic layer disposed thereon to have flexibility, the tensile elastic modulus (N/m²) of the elastic layer at 25°C is preferably 0.1 N/m² or more and 100 N/m² or less, more preferably 0.1 N/m² or more and 50 N/m² or less, and still more preferably 0.1 N/m² or more and 10 N/m² or less. The tensile elastic modulus of the elastic layer can be measured by the same method as that described above for the film.

No particular limitation is imposed on the thickness of the elastic layer, so long as the effects of the disclosure are not impaired.

### (Relation between film and elastic layer)

From the viewpoint of allowing the elastic layer-attached film including the elastic layer to have flexibility, the ratio of the tensile elastic modulus (N/m²) of the film at 25°C (N/m²) to the tensile elastic modulus (N/m²) of the elastic layer at 25°C (N/m²) (the tensile elastic modulus (N/m²) of the film at 25°C / the tensile elastic modulus (N/m²) of the elastic layer at 25°C) may be 10 to 3,000. When the ratio of the tensile elastic modulus (N/m²) of the film at 25°C (N/m²) to the tensile elastic modulus (N/m²) of the elastic layer at 25°C (N/m²) is within the above range, the film obtained can easily maintain flexibility even after use under repeated heating, and the quality of images obtained using an image forming apparatus in which the elastic layer-attached film including the elastic layer is applied to a fixing member or a transfer member can be easily improved.

No particular limitation is imposed on the method for producing the film in the present exemplary embodiment. For example, the film can be produced by applying a coating solution for forming the film to the elastic layer and drying it.

### <Fixing device>

The fixing device in the present exemplary embodiment includes;
a first rotatable member; and a second rotatable member disposed in contact with the outer surface of the first rotatable member,
wherein at least one of the first rotatable member and the second rotatable member includes the elastic layer-attached film in the present exemplary embodiment.

The fixing device in the present exemplary embodiment will be described. The fixing device is embodied as a fixing device in a first exemplary embodiment including a heating roller and a pressing belt, a fixing device in a second exemplary embodiment including a heating belt and a pressing roller, or a fixing device in a third exemplary embodiment that is an electromagnetic induction heating type fixing device including a heating belt and a pressing roller.

The fixing device in the present exemplary embodiment is not limited to the first to third exemplary embodiments and may be a fixing device including a heating belt and a pressing belt.

In the fixing device in the present exemplary embodiment, the elastic layer-attached film in the present exemplary embodiment may be applied to any of a heating roller, a heating belt, a pressing roller, and a pressing belt.

### (First exemplary embodiment of fixing device)

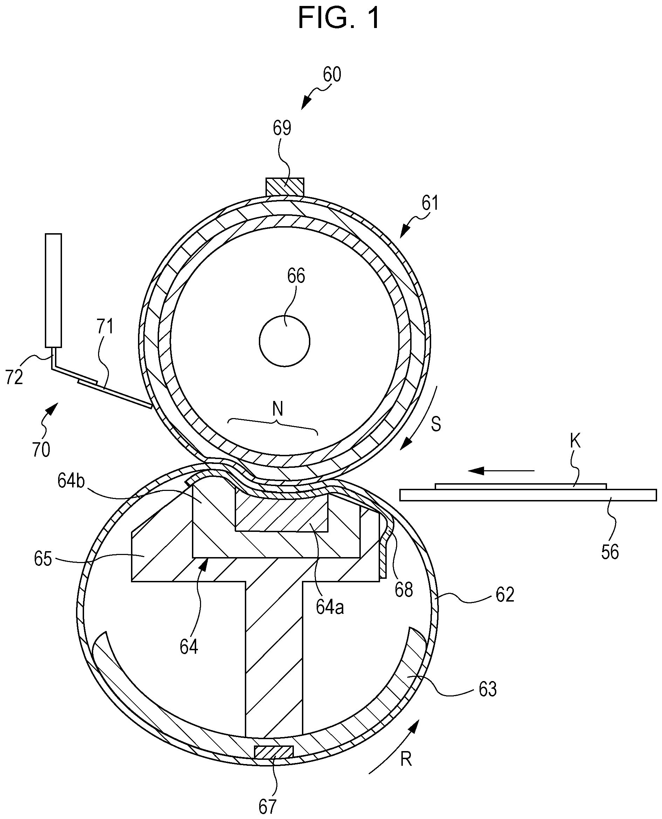

The first exemplary embodiment of the fixing device will be described with reference to Fig. 1. Fig. 1 is a schematic illustration showing an example of the first exemplary embodiment of the fixing device (i.e., a fixing device 60).

As shown in Fig. 1, the fixing device 60 includes, for example, a heating roller 61 (an example of the first rotatable member) driven to rotate, a pressing belt 62 (an example of the second rotatable member), and a pressing pad 64 (an example of a pressing member) that presses the heating roller 61 through the pressing belt 62.

It is only necessary that the pressing pad 64 be disposed such that, for example, the pressing belt 62 and the heating roller 61 are pressed against each other. Therefore, the pressing belt 62 may be pressed against the heating roller 61, or the heating roller 61 may be pressed against the pressing belt 62.

A halogen lamp 66 (an example of a heating device) is disposed inside the heating roller 61. The heating device is not limited to the halogen lamp, and any other heat-generating member that generates heat may be used.

For example, a temperature sensing element 69 is disposed in contact with a surface of the heating roller 61. The halogen lamp 66 is turned on or off based on the temperature value measured by the temperature sensing element 69, and the surface temperature of the heating roller 61 is thereby maintained at a target temperature (e.g., 150°C).

The pressing belt 62 is rotatably supported, for example, by the pressing pad 64 and a belt-running guide 63 that are disposed on the inner side of the pressing belt 62. The pressing belt 62 is disposed so as to be pressed against the heating roller 61 by the pressing pad 64 at a nip part N.

For example, the pressing pad 64 is disposed so as to be pressed against the heating roller 61 through the pressing belt 62 on the inner side of the pressing belt 62, and the nip part N is formed between the pressing pad 64 and the heating roller 61.

The pressing pad 64 includes, for example: a front nipping member 64a disposed on the entrance side of the nip part N to provide the large-width nip part N; and a release nipping member 64b disposed on the exit side of the nip part N to distort the heating roller 61.

To reduce the sliding resistance between the inner circumferential surface of the pressing belt 62 and the pressing pad 64, a sheet-shaped sliding member 68, for example, is disposed on surfaces of the front nipping member 64a and the release nipping member 64b that are in contact with the pressing belt 62. The pressing pad 64 and the sliding member 68 are held by a metallic holding member 65.

For example, the sliding member 68 is disposed such that its sliding surface is in contact with the inner circumferential surface of the pressing belt 62 and participates in supply and maintenance of oil between the sliding member 68 and the pressing belt 62.

For example, the belt-running guide 63 is attached to the holding member 65 to allow the pressing belt 62 to rotate.

The heating roller 61 is rotated in the direction of an arrow S by, for example, an unillustrated driving motor, and the pressing belt 62 is driven by the rotation of the heating roller 61 and rotates in the direction of an arrow R that is opposite to the rotation direction of the heating roller 61. Specifically, for example, the heating roller 61 rotates in the clockwise direction in Fig. 1, and the pressing belt 62 rotates in the counterclockwise direction.

A paper sheet K (an example of the recording medium) with an unfixed toner image formed thereon is guided by, for example, a fixation entrance guide 56 and transported to the nip part N. When the paper sheet K passes through the nip part N, the unfixed toner image on the paper sheet K is fixed by pressure and heat applied to the nip part N.

In the fixing device 60, for example, the front nipping member 64a having a concave shape conforming to the outer circumferential surface of the heating roller 61 allows the nip part N to have a larger area than that without the front nipping member 64a.

In the fixing device 60, for example, the release nipping member 64b is disposed so as to protrude toward the outer circumferential surface of the heating roller61, so that the distortion of the heating roller 61 increases locally in an exit region of the nip part N.

Since the release nipping member 64b is disposed as described above, the paper sheet K subjected to fixation passes through the portion with large local distortion during passage through a release nipping region, and therefore the paper sheet K is easily released from the heating roller 61.

For example, a release member 70 used as an auxiliary release unit is disposed downstream of the nip part N of the heating roller 61. The release member 70 is held, for example, by a holding member 72 such that a release claw 71 extending in a direction (counter direction) opposite to the rotation direction of the heating roller 61 is disposed close to the heating roller 61.

### (Second exemplary embodiment of fixing device)

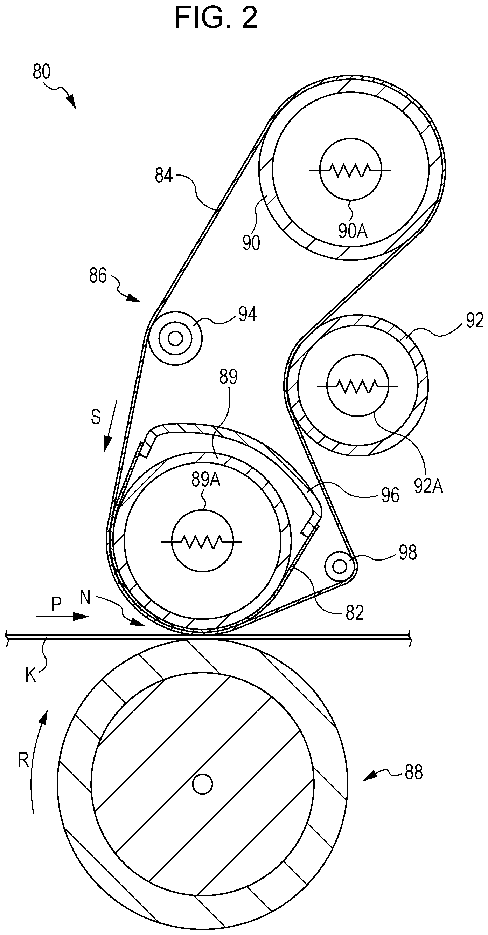

The second exemplary embodiment of the fixing device will be described with reference to Fig. 2. Fig. 2 is a schematic illustration showing an example of the second exemplary embodiment of the fixing device (i.e., a fixing device 80).

As shown in Fig. 2, the fixing device 80 includes, for example: a fixing belt module 86 including a heating belt 84 (an example of the first rotatable member); and a pressing roller 88 (an example of the second rotatable member) pressed against the heating belt 84 (the fixing belt module 86). For example, a nip part N is formed at a contact portion between the heating belt 84 (the fixing belt module 86) and the pressing roller 88. In the nip part N, a paper sheet K (an example of the recording medium) is pressurized and heated, and a toner image is thereby fixed.

The fixing belt module 86 includes, for example: the endless heating belt 84; a heat-pressing roller 89 which is disposed on the side toward the pressing roller 88, around which the heating belt 84 is wound, and which is driven to rotate by the rotating force of a motor (not shown) and presses the inner circumferential surface of the heating belt 84 toward the pressing roller 88; and a support roller 90 that supports the heating belt 84 from its inner side at a position different from the heat-pressing roller 89.

The fixing belt module 86 further includes, for example: a support roller 92 that is disposed on the outer side of the heating belt 84 and determines a circulating path of the heating belt 84; a trajectory correction roller 94 that corrects the trajectory of the heating belt 84 in a region between the heat-pressing roller 89 and the support roller 90; and a support roller 98 that applies tension to the heating belt 84 from its inner circumferential surface at a position downstream of the nip part N formed by the heating belt 84 and the pressing roller 88.

For example, the fixing belt module 86 is disposed such that a sheet-shaped sliding member 82 is disposed between the heating belt 84 and the heat-pressing roller 89.

For example, the sliding member 82 is disposed such that its sliding surface is in contact with the inner circumferential surface of the heating belt 84 and participates in supply and maintenance of oil present between the sliding member 82 and the heating belt 84.

For example, the sliding member 82 is disposed such that its opposite ends are supported by a support member 96.

For example, a halogen heater 89A (an example of the heating device) is disposed inside the heat-pressing roller 89.

The support roller 90 is, for example, a cylindrical roller made of aluminum, and a halogen heater 90A (an example of the heating device) is disposed thereinside to heat the heating belt 84 from its inner circumferential surface side.

For example, spring members (not shown) that press the heating belt 84 outward are disposed at opposite ends of the support roller 90.

The support roller 92 is, for example, a cylindrical roller made of aluminum, and a release layer made of a fluorocarbon resin and having a thickness of 20 µm is formed on a surface of the support roller 92.

For example, the release layer on the support roller 92 is formed in order to prevent toner and paper powder on the outer circumferential surface of the heating belt 84 from being deposited on the support roller 92.

For example, a halogen heater 92A (an example of the heating device) is disposed inside the support roller 92 and heats the heating belt 84 from its outer circumferential side.

Specifically, for example, the heating belt 84 is heated by the heat-pressing roller 89, the support roller 90, and the support roller 92.

The trajectory correction roller 94 is, for example, a cylindrical roller made of aluminum, and an edge position measuring mechanism (not shown) that measures an edge position of the heating belt 84 is disposed near the trajectory correction roller 94.

For example, an axial position changing mechanism (not shown) that changes the axial contact position of the heating belt 84 according to the results of measurement by the edge position measuring mechanism is disposed in the trajectory correction roller 94, and meandering of the heating belt 84 is thereby controlled.

For example, the pressing roller 88 is rotatably supported and is pressed by an urging unit such as an unillustrated spring against a portion of the heating belt 84 that is wound around the heat-pressing roller 89. Therefore, as the heating belt 84 (the heat-pressing roller 89) of the fixing belt module 86 rotates and moves in the direction of an arrow S, the pressing roller 88 driven by the heating belt 84 (the heat-pressing roller 89) rotates and moves in the direction of an arrow R.

A paper sheet K with an unfixed toner image (not shown) placed thereon is transported in the direction of an arrow P and guided to the nip part N of the fixing device 80. When the paper sheet K passes through the nip part N, the unfixed toner image on the paper sheet K is fixed by pressure and heat applied to the nip part N.

In the description of the fixing device 80, the halogen heaters (halogen lamps) are used as examples of the plurality of heating devices, but this is not a limitation. Heating elements other than the halogen heaters may be used. Examples of such heating elements include radiation lamp heating elements (heating elements that emit radiation such as infrared radiation) and resistance heating elements (heating elements in which an electric current is applied to a resistor to generate Joule heat: e.g., a heating element prepared by forming a film with resistance on a ceramic substrate and then firing the resulting substrate).

### (Fixing device in third exemplary embodiment)

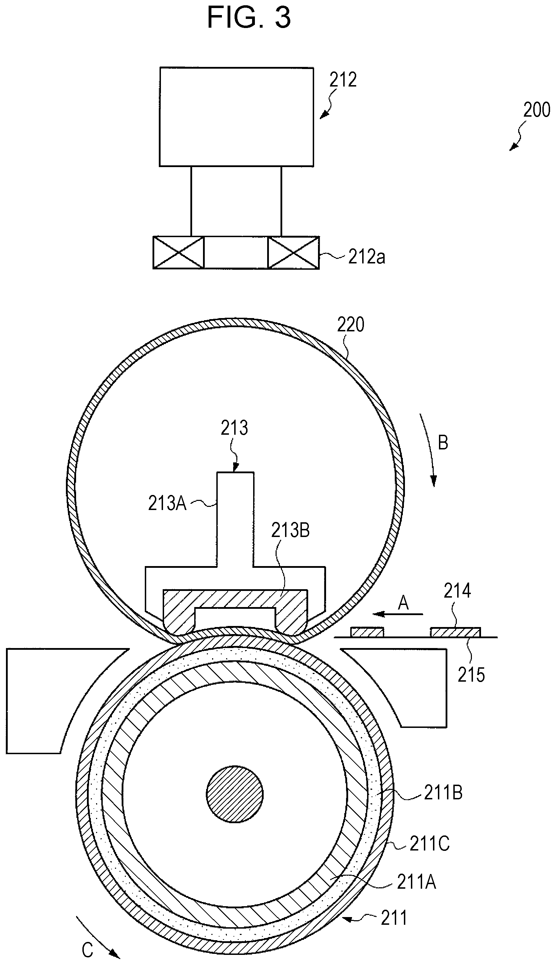

The third exemplary embodiment of the fixing device will be described with reference to Fig. 3. Fig. 3 is a schematic illustration showing an example of the third exemplary embodiment of the fixing device (i.e., a fixing device 200).

As shown in Fig. 3, the fixing device 200 is an electromagnetic induction type fixing device including a belt 220 having a metal layer.

In the fixing device 200, a pressing roller (pressing member) 211 is disposed so as to press part of the belt 220. From the viewpoint of efficient fixation, a contact region (nip) is formed between the belt 220 and the pressing roller 211, and the belt 220 is curved so as to conform to the circumferential surface of the pressing roller 211. From the viewpoint of obtaining recording medium releasability, a curved portion is formed at a downstream end of the contact region (nip) such that the belt is curved.

The pressing roller 211 includes a base 211A, an elastic layer 211B made of, for example, silicone rubber and formed on the base 211A, and a release layer 211C made of a fluorine-based compound and formed on the elastic layer 211B.

A counter member 213 is disposed on the inner side of the belt 220 at a position facing the pressing roller 211. The counter member 213 is made of, for example, a metal, a heat-resistant resin, or heat-resistant rubber and includes: a pad 213B that is in contact with the inner circumferential surface of the belt 220 to increase pressure locally; and a support 13A that supports the pad 213B.

An electromagnetic induction heater 212 including an electromagnetic induction coil (exciting coil) 212a installed therein is disposed at a position opposed to the pressing roller 211 (an example of the pressing member) with the belt 220 at the center. In the electromagnetic induction heater 212, the magnetic field generated is changed using an exciting circuit by changing an AC current applied to the electromagnetic induction coil. An eddy current is thereby generated in the unillustrated metal layer (e.g., an electromagnetic induction metal layer) of the belt 220. The eddy current is converted to heat (Joule heat) by the electric resistance of the unillustrated metal layer, and heat is thereby generated on the surface of the belt 220.

The position of the electromagnetic induction heater 212 is not limited to the position shown in Fig. 3. For example, the electromagnetic induction heater 212 may be disposed on the upstream side, with respect to a rotation direction B, of the contact region of the belt 220 or may be disposed on the inner side of the belt 220.

In the fixing device 200, a driving force is transmitted from a driving device to a gear fixed to an edge portion of the belt 220, and the belt 220 thereby rotates in the direction of an arrow B. As the belt 220 rotates, the pressing roller 211 rotates in the opposite direction, i.e., the direction of an arrow C.

A recording medium 215 with an unfixed toner image 214 formed thereon moves in the direction of an arrow A and passes through the contact region (nip) between the belt 220 and the pressing roller 211 in the fixing device 200. Pressure is applied to the unfixed toner image in a molten state, and the toner image is thereby fixed to the recording medium 215.

### <Transfer device>

Next, a transfer device in the present exemplary embodiment will be described.

The transfer device in the present exemplary embodiment includes:
an intermediate transfer body including the elastic layer-attached film in the present exemplary embodiment and having an outer circumferential surface onto which a toner image is to be transferred;
a first transfer unit that first-transfers a toner image formed on the surface of an image holding member onto the surface of the intermediate transfer body; and
a second transfer unit that second-transfers the toner image transferred onto the surface of the intermediate transfer body onto a surface of a recording medium.

### (First transfer unit)

In the first transfer unit, a first transfer member is disposed so as to be opposed to the image holding member with the intermediate transfer body therebetween. In the first transfer unit, the first transfer member is used to apply a voltage whose polarity is opposite to the charge polarity of the toner to the intermediate transfer body, and the toner image is thereby first-transferred onto the outer circumferential surface of the intermediate transfer body.

### (Second transfer unit)

In the second transfer unit, a second transfer member is disposed on the toner image holding side of the intermediate transfer body. The second transfer unit further includes, in addition to the second transfer member, a back member disposed on the side opposite to the toner image holding side of the intermediate transfer body. In the second transfer unit, the intermediate transfer body and a recording medium are sandwiched between the second transfer member and the back member, and a transfer electric field is formed to second-transfer the toner image on the intermediate transfer body onto the recording medium.

The second transfer member may be a second transfer roller or may be a second transfer belt. The back member used is, for example, a back roller.

The transfer device in the present exemplary embodiment may be a transfer device that transfers a toner image onto the surface of a recording medium through a plurality of intermediate transfer bodies. Specifically, the transfer device may be, for example, as follows. A toner image is first-transferred from the image holding member onto a first intermediate transfer body, and the toner image is second-transferred from the first intermediate transfer body onto a second intermediate transfer body. Then the toner image is third-transferred from the second intermediate transfer body onto a recording medium.

In the transfer device, an intermediate transfer body including the elastic layer-attached film in the present exemplary embodiment described above is applied to at least one of the plurality of intermediate transfer bodies.

### <Image forming apparatus>

Next, an image forming apparatus in the present exemplary embodiment will be described.

The image forming apparatus in the present exemplary embodiment includes: image holding members; charging devices that charge the surfaces of the respective image holding members; electrostatic latent image forming devices that form electrostatic latent images on the charged surfaces of the respective image holding members; developing devices that house respective developers containing toners and develop the electrostatic latent images formed on the surfaces of the image holding members with the respective developers to thereby form toner images; a transfer device that transfers the toner images onto a surface of a recording medium; and a fixing device that fixes the toner images to the recording medium.

The transfer device in the present exemplary embodiment is used for the above transfer device.

The fixing device in the present exemplary embodiment is used for the above fixing device.

In the image forming apparatus in the present exemplary embodiment, the transfer device and the fixing device may each be formed as a cartridge detachably attached to the image forming apparatus. Specifically, the image forming apparatus in the present exemplary embodiment may include the transfer device and the fixing device in the present exemplary embodiment as components of process cartridges.

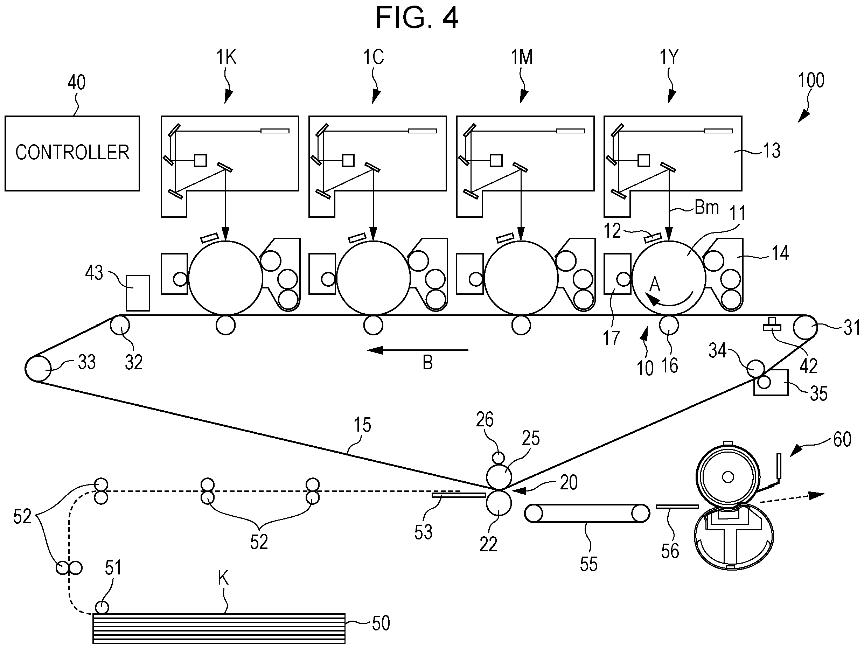

The image forming apparatus in the present exemplary embodiment will be described with reference to Fig. 4.

Fig. 4 is a schematic illustration showing the structure of the image forming apparatus in the present exemplary embodiment.

As shown in Fig. 4, the image forming apparatus 100 in the present exemplary embodiment is, for example, an intermediate transfer type image forming apparatus having a so-called tandem configuration and includes: a plurality of image forming units 1Y, 1M, 1C, and 1K that form toner images of respective colors by an electrophotographic process; first transfer units 10 that transfer (first-transfer) the color toner images formed by the image forming units 1Y, 1M, 1C, and 1K sequentially onto an intermediate transfer belt 15; a second transfer unit 20 that transfers (second-transfers) all the superposed toner images transferred onto the intermediate transfer belt 15 at once onto a paper sheet K used as a recording medium; and a fixing device 60 that fixes the second-transferred images to the paper sheet K. The image forming apparatus 100 further includes a controller 40 that controls the operation of each device (each unit).

Each of the image forming units 1Y, 1M, 1C, and 1K of the image forming apparatus 100 includes a photoreceptor 11 that rotates in the direction of an arrow A and serves as an example of the image holding members each of which holds a toner image formed on its surface.

A charging unit 12 that charges the photoreceptor 11 and serves as an example of the charging device is disposed near the circumferential surface of the photoreceptor 11. A laser exposure unit 13 serving as an example of the electrostatic latent image forming device and used to write an electrostatic latent image on the photoreceptor 11 is disposed above the photoreceptor 11 (in Fig. 4, an exposure beam is denoted by symbol Bm).

A developing unit 14 that serves as an example of the developing device, houses a color toner, and visualizes the electrostatic latent image on the photoreceptor 11 with the toner is disposed near the circumferential surface of the photoreceptor 11, and a first transfer roller 16 that transfers the color toner image formed on the photoreceptor 11 onto the intermediate transfer belt 15 in a corresponding first transfer unit 10 is disposed near the circumferential surface of the photoreceptor 11.

A photoreceptor cleaner 17 that removes the toner remaining on the photoreceptor 11 is disposed near the circumferential surface of the photoreceptor 11. These electrophotographic devices including the charging unit 12, the laser exposure unit 13, the developing unit 14, the first transfer roller 16, and the photoreceptor cleaner 17 are sequentially arranged in the rotation direction of the photoreceptor 11. The image forming units 1Y, 1M, 1C, and 1K are arranged substantially linearly in the order of yellow (Y), magenta (M), cyan (C), and black (K) from the upstream side of the intermediate transfer belt 15.

The intermediate transfer belt 15 serving as the intermediate transfer body is formed from a film-shaped pressing belt that includes a base layer made of a resin and contains an appropriate amount of an antistatic agent such as carbon black. The intermediate transfer belt 15 is formed so as to have a volume resistivity of 10⁶ Ω·cm or more and 10¹⁴ Ω·cm or less, and its thickness is, for example, about 0.1 mm.

The intermediate transfer belt 15 is circulated (rotated) by various rollers in a direction B shown in Fig. 4 at a speed appropriate for its intended use. These rollers include: a driving roller 31 driven by a motor (not shown) having a good constant speed property to rotate the intermediate transfer belt 15; a support roller 32 that supports the intermediate transfer belt 15 extending substantially linearly in the arrangement direction of the photoreceptors 11; a tension applying roller 33 that applies tension to the intermediate transfer belt 15 and serves as a correction roller for preventing meandering of the intermediate transfer belt 15; a back roller 25 disposed in the second transfer unit 20; and a cleaning back roller 34 disposed in a cleaning unit in which the toners remaining on the intermediate transfer belt 15 are scraped off.

Each first transfer unit 10 includes a corresponding first transfer roller 16 facing a corresponding photoreceptor 11 with the intermediate transfer belt 15 therebetween. The first transfer roller 16 includes a core and a sponge layer serving as an elastic layer adhering to the circumferential surface of the core. The core is a cylindrical rod made of a metal such as iron or SUS. The sponge layer is formed of a rubber blend of NBR, SBR, and EPDM with a conducting agent such as carbon black added thereto and is a sponge-like cylindrical roller having a volume resistivity of 10^{7.5} Ω cm or more and 10^{8.5} Ω cm or less.

The first transfer roller 16 is disposed so as to be pressed against the photoreceptor 11 with the intermediate transfer belt 15 therebetween, and a voltage (first transfer bias) with polarity opposite to the charge polarity of the toner (negative polarity, the same applies to the following) is applied to the first transfer roller 16. Therefore, the toner images on the photoreceptors 11 are electrostatically attracted to the intermediate transfer belt 15 in a sequential manner, and the toner images are superposed on the intermediate transfer belt 15.

The second transfer unit 20 includes the back roller 25 and a second transfer roller 22 disposed on the toner image holding surface side of the intermediate transfer belt 15.

The surface of the back roller 25 is formed from a tube made of a rubber blend of EPDM and NBR with carbon dispersed therein, and the inner portion of the back roller 25 is made of EPDM rubber. The back roller 25 is formed such that its surface resistivity is 10⁷ Ω/square or more and 10¹⁰ Ω/square or less, and its hardness is set to, for example, 70° (the ASKER C manufactured by Kobunshi Keiki Co., Ltd., the same applies to the following). The back roller 25 is disposed on the back side of the intermediate transfer belt 15 and forms a counter electrode of the second transfer roller 22, and a metallic feeding roller 26 to which a second transfer bias is stably applied is disposed in contact with the back roller 25.

The second transfer roller 22 includes a core and a sponge layer serving as an elastic layer adhering to the circumferential surface of the core. The core is a cylindrical rod made of a metal such as iron or SUS. The sponge layer is formed of a rubber blend of NBR, SBR, and EPDM with a conducting agent such as carbon black added thereto and is a sponge-like cylindrical roller having a volume resistivity of 10^{7.5} Ω·cm or more and 10^{8.5} Ω·cm or less.

The second transfer roller 22 is disposed so as to be pressed against the back roller 25 with the intermediate transfer belt 15 therebetween. The second transfer roller22 is grounded. The second transfer bias is formed between the second transfer roller 22 and the back roller 25, and the toner images are second-transferred onto a paper sheet K transported to the second transfer unit 20.

An intermediate transfer belt cleaner 35 is disposed downstream of the second transfer unit 20 so as to be separable from the intermediate transfer belt 15. The intermediate transfer belt cleaner 35 removes the toners and paper powder remaining on the intermediate transfer belt 15 after the second transfer to thereby clean the surface of the intermediate transfer belt 15.

The intermediate transfer belt 15, the first transfer units 10 (the first transfer rollers 16), and the second transfer unit 20 (the second transfer roller 22) correspond to an example of the transfer device.

A reference sensor (home position sensor) 42 that generates a reference signal used as a reference for image formation timings in the image forming units 1Y, 1M, 1C, and 1K is disposed upstream of the yellow image forming unit 1Y. When the reference sensor 42 detects a mark provided on the back side of the intermediate transfer belt 15, the reference sensor 42 generates the reference signal. The controller 40 issues instructions based on the reference signal to start image formation in the image forming units 1Y, 1M, 1C, and 1K.

An image density sensor 43 for image quality adjustment is disposed downstream of the black image forming unit 1K.

The image forming apparatus in the present exemplary embodiment further includes, as a transport unit that transports a paper sheet K: a paper sheet container 50 that contains paper sheets K; a paper feed roller 51 that picks up and transports the paper sheets K stacked in the paper sheet container 50 one by one at predetermined timing; transport rollers 52 that transport each paper sheet K fed by the paper feed roller 51; a transport guide 53 that feeds the paper sheet K transported by the transport rollers 52 to the second transfer unit 20; a transport belt 55 that transports, to the fixing device 60, the paper sheet K transported after second transfer by the second transfer roller 22; and a fixation entrance guide 56 that guides the paper sheet K to the fixing device 60.

Next, a basic image forming process of the image forming apparatus in the present exemplary embodiment will be described.

In the image forming apparatus in the present exemplary embodiment, image data outputted from, for example, an unillustrated image reading device or an unillustrated personal computer (PC) is subj ected to image processing in an unillustrated image processing device, and image forming operations are performed in the image forming units 1Y, 1M, 1C, and 1K.

In the image processing device, the inputted reflectance data is subjected to various types of image processing such as shading compensation, misregistration correction, lightness/color space transformation, gamma correction, frame erasure, and various types of image editing such as color editing and move editing. The image data subjected to the image processing is converted to four types of color tone data including Y color data, M color data, C color data, and K color data, and they are outputted to the respective laser exposure units 13.

Each of the laser exposure units 13 irradiates the photoreceptor 11 of a corresponding one of the image forming units 1Y, 1M, 1C, and 1K with an exposure beam Bm emitted from, for example, a semiconductor laser according to the inputted color tone data. In each of the image forming units 1Y, 1M, 1C, and 1K, the surface of the photoreceptor 11 is charged by the charging unit 12 and is then scanned and exposed using the laser exposure unit 13, and an electrostatic latent image is thereby formed. The formed electrostatic latent images are developed in the respective image forming units 1Y, 1M, 1C, and 1K to thereby form Y, M, C, and K color images.

The toner images formed on the photoreceptors 11 of the image forming units 1Y, 1M, 1C, and 1K are transferred onto the intermediate transfer belt 15 in the first transfer units 10 in which the photoreceptors 11 come into contact with the intermediate transfer belt 15. More specifically, in each of the first transfer units 10, a voltage (first transfer bias) with polarity opposite to the charge polarity (negative polarity) of the toner is applied by the first transfer roller 16 to the base of the intermediate transfer belt 15. The toner images are thereby sequentially superposed onto the surface of the intermediate transfer belt 15, and the first transfer is completed.

After the toner images have been sequentially first-transferred onto the surface of the intermediate transfer belt 15, the intermediate transfer belt 15 moves, and the toner images are transported toward the second transfer unit 20. When the toner images are transported toward the second transfer unit 20, the paper feed roller 51 in the transport unit starts rotating at the timing of transportation of the toner images toward the second transfer unit 20 to feed a paper sheet K of the intended size from the paper sheet container 50. The paper sheet K fed by the paper feed roller 51 is transported by the transport rollers 52 and reaches the second transfer unit 20 through the transport guide 53. Before the paper sheet K reaches the second transfer unit 20, the paper sheet K is temporarily stopped. Then a registration roller (not shown) starts rotating at an appropriate timing determined by the movement of the intermediate transfer belt 15 with the toner images held thereon, and the position of the paper sheet K is thereby aligned with the position of the toner images.

In the second transfer unit 20, the second transfer roller 22 is pressed against the back roller 25 with the intermediate transfer belt 15 therebetween. In this case, the paper sheet K transported at the appropriate timing is pinched between the intermediate transfer belt 15 and the second transfer roller 22. Then, when a voltage (second transfer bias) with the same polarity as the charge polarity (negative polarity) of the toner is applied from the feeding roller 26, a transfer electric field is formed between the second transfer roller 22 and the back roller 25. All the unfixed toner images held on the intermediate transfer belt 15 are thereby electrostatically transferred at once onto the paper sheet K in the second transfer unit 20 in which the intermediate transfer belt 15 is pressed by the second transfer roller 22 and the back roller 25.

Then the paper sheet K with the toner images electrostatically transferred thereon is released from the intermediate transfer belt 15 and transported by the second transfer roller 22 to the transport belt 55 disposed downstream, with respect to the transfer direction of the paper sheet, of the second transfer roller 22. The transport belt 55 transports the paper sheet K to the fixing device 60 at an optimal transport speed for the fixing device 60. The unfixed toner images on the paper sheet K transported to the fixing device 60 are subjected to fixing processing using heat and pressure by the fixing device 60 and thereby fixed to the paper sheet K. The paper sheet K with the fixed image formed thereon is transported to an output sheet container (not shown) disposed in an output unit of the image forming apparatus.

After completion of transfer onto the paper sheet K, the toner remaining on the intermediate transfer belt 15 is transported to the cleaning unit by the rotation of the intermediate transfer belt 15 and is removed from the intermediate transfer belt 15 by the cleaning back roller 34 and the intermediate transfer belt cleaner 35.

Although the exemplary embodiments have been described, the present disclosure is not to be construed as being limited to the exemplary embodiments, and various modifications, changes, and improvements are possible.

### [EXAMPLES]

The present exemplary embodiment will be described in more detail by way of Examples. However, the present exemplary embodiment is not limited only to the following Examples. In the following description, "parts" means "parts by mass," unless otherwise specified.

### <EXAMPLE 1>

An endless belt-shaped polyimide (PI) base having a diameter of 168 mm, a width of 400 mm, and a thickness of 80 µm is prepared.

Next, butyl acetate is added to a liquid thermosetting silicone rubber composition (KE-1950-35A/B manufactured by Shin-Etsu Chemical Co., Ltd.) in such an amount that the concentration of butyl acetate is 15% by mass, and the mixture is stirred to prepare an elastic layer-forming coating solution. The elastic layer-forming coating solution is applied to the prepared PI base to a thickness of 500 µm by a blade coating method. Then the resulting PI base is heated and dried in a hot air drying furnace at 1 10°C for 20 minutes to form a cured resin layer on the PI base. A resin composition coating solution containing an additive shown in Table 1 is applied to the elastic layer and dried to thereby obtain an evaluation sample.

The ingredients of the coating solution are as follows.
Binder resin: Thermosetting silicone rubber composition X34-3160 (manufactured by Shin-Etsu Chemical Co., Ltd.) (84 parts)
Additive: PSS-octakis(dimethylsilyloxy) substituted (manufactured by Sigma-Aldrich) (3 parts)
Solvent: Butyl acetate (13 parts)

### <EXAMPLE 2>

An evaluation sample is obtained using the same procedure as in Example 1 except that the content of the PSS-octakis(dimethylsilyloxy) substituted is changed to 6 parts.

### <EXAMPLE 3>

An evaluation sample is obtained using the same procedure as in Example 1 except that the content of the PSS-octakis(dimethylsilyloxy) substituted is changed to 30 parts.

### <EXAMPLES 4 to 6>

Evaluation samples are obtained using the same procedure as in Example 1 except that the PSS-octakis(dimethylsilyloxy) substituted is changed to polymethylsilsesquioxane X-52-854 (manufactured by Shin-Etsu Chemical Co., Ltd.) and that its content is changed.

### <EXAMPLE 7>

An evaluation sample is obtained using the same procedure as in Example 1 except that the PSS-octakis(dimethylsilyloxy) substituted is changed to a dendrimer prepared using 3,5-dimethoxybenzoic acid methyl ester (TOKYO CHEMICAL INDUSTRY Co., Ltd.) as a dendrimer raw material and that its amount added is set to 10 parts.

The peel strengths of the film of the evaluation sample at 25°C and 200°C are measured by the method described above in the same manner as in Example 1.

The tensile elastic modulus (N/m²) of the elastic layer at 25°C and the elastic modulus of the film at 25°C are measured by the method described above in the same manner as in Example 1, and their ratio is computed.

### <EXAMPLE 8>

An evaluation sample is obtained using the same procedure as in Example 1 except that the PSS-octakis(dimethylsilyloxy) substituted is changed to a siloxane dendrimer DOWSIL FA-4001 (manufactured by Dow Chemical Japan Limited) and that its content is set to 10 parts.

### <EXAMPLE 9>

An evaluation sample is obtained using the same procedure as in Example 1 except that the content of the PSS-octakis(dimethylsilyloxy) substituted is changed to 30 parts and that the elastic layer is changed to an elastic layer produced using a silicone rubber composition KE-111 (manufactured by Shin-Etsu Chemical Co., Ltd.).

### <Comparative Example 1>

An evaluation sample is obtained using the same procedure as in Example 1 except that the PSS-octakis(dimethylsilyloxy) substituted is changed to a polyester-modified silicone resin KR-5235 (manufactured by Shin-Etsu Chemical Co., Ltd.).

### <Comparative Example 2>

An evaluation sample is obtained using the same procedure as in Example 1 except that the PSS-octakis(dimethylsilyloxy) substituted is changed to a polyester-modified silicone resinKR-5235 (manufactured by Shin-Etsu Chemical Co., Ltd.), that its content is set to 6 parts, and that the elastic layer is changed to an elastic layer produced using a silicone rubber composition KE-1600 (manufactured by Shin-Etsu Chemical Co., Ltd.).

### <Evaluation>

For each of the evaluation samples in the Examples and Comparative Examples, the peel strengths at 25°C and 200°C are measured by the method described above. For each of the evaluation samples, the tensile elastic modulus (N/m²) of the elastic layer at 25°C and the tensile elastic modulus of the film at25°C are also measured by the method described above. The ratio of them is also computed.

One of the evaluation samples is used as the pressing member of the fixing device of an image forming apparatus (obtained by modifying DocuColor-7171P manufactured by FUJIFILM Business Innovation Corp.), and a solid black image is formed on a paper sheet (LEATHAC 66). An offset area in the image formed is determined and evaluated. The offset area is computed as the ratio of the area of blank spots to the total area of the image.

The evaluation is conducted according to the following criteria.
A: The offset area is 0%.
B: The offset area is more than 0% and 10% or less.
C: The offset area is more than 10% and 30% or less.
D: The offset area is more than 30% and 80% or less.

The results are shown in Table 1.

**[Table 1]**

| | Additive | Content (parts by mass) | Content (% by mass) | Peel strength (A) at 25°C (kPa) (film) | Peel strength (B) at 200°C (kPa) (film) | B-A (kPa) | Tensile elastic modulus at 25°C (N/m²) (film) | Tensile elastic modulus at 25°C (N/m²) (elastic layer) | Tensile elastic modulus at 25°C (film) / tensile elastic modulus at 25°C (elastic layer) | Image quality |
|---|---|---|---|---|---|---|---|---|---|---|
| Example 1 | PSS-octakis(dimethylsilyloxy) substituted (silsesquioxane monomer) | 3 | 3.4 | 10 | 20 | 10 | 5 | 0 | 50 | A |
| Example 2 | PSS-octakis(dimethylsilyloxy) substituted (silsesquioxane monomer) | 6 | 6.7 | 10 | 15 | 5 | 10 | 0 | 100 | A |
| Example 3 | PSS-octakis(dimethylsilyloxy) substituted (silsesquioxane monomer) | 30 | 26.3 | 10 | 10 | 0 | 100 | 0 | 1000 | B |
| Example 4 | Polymethylsilsesquioxane X-52-854 (silsesquioxane resin) | 3 | 3.4 | 10 | 20 | 10 | 5 | 0 | 50 | A |
| Example 5 | Polymethylsilsesquioxane X-52-854 (silsesquioxane resin) | 6 | 6.7 | 10 | 15 | 5 | 10 | 0 | 100 | A |
| Example 6 | Polymethylsilsesquioxane X-52-854 (silsesquioxane resin) | 30 | 26.3 | 10 | 10 | 0 | 100 | 0 | 1000 | B |
| Example 7 | Dendrimer | 10 | 106 | 20 | 30 | 10 | 300 | 0 | 3000 | B |
| Example 8 | DOWSIL FA-4001 (siloxane dendrimer) | 10 | 106 | 20 | 25 | 5 | 100 | 0 | 1000 | B |
| Example 9 | PSS-octakis(dimethylsilyloxy) substituted (silsesquioxane monomer) | 30 | 26.3 | 10 | 20 | 10 | 100 | 10 | 10 | A |
| Comparative Example 1 | KR-5235 (polyester-modified silicone resin) | 3 | 3.4 | 25 | 50 | 25 | 5 | 0 | 50 | D |
| Comparative Example 2 | KR-5235 (polyester-modified silicone resin) | 6 | 6.7 | 20 | 50 | 30 | 10 | 200 | 0 | D |

As can be seen from the results in Table 1, in the films in the Examples, high releasability can be maintained even after use under repeated heating.

As can be seen, when any of the films in the Examples is used as the pressing member of the fixing device of the image forming apparatus, the quality of images obtained is good.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A film including a fluorine-free material and having a peel strength (kPa) from a fixed resin of (A) at 25°C and (B) at 200°C satisfying that (A) is 0 kPa or more and 20 kPa or less and (B - A) is 10 kPa or less.
(((2))) The film according to (((1))), wherein the fluorine-free material includes at least a dendrimer or a compound having a structure A represented by formula: [RSiO_{1.5}]ₙ (wherein, in the formula, R represents an organic group, and n represents an integer of 2 or more).
(((3))) The film according to (((2))), wherein the content of the dendrimer or the compound having the structure A is 3 parts by mass or more.
(((4))) The film according to (((2))), wherein the content of the dendrimer or the compound having the structure A is 6 parts by mass or more.
(((5))) The film according to (((1))), the film including an elastic layer.
(((6))) The film according to (((5))), wherein the ratio of the tensile elastic modulus (N/m²) of the film at 25°C to the tensile elastic modulus (N/m²) of the elastic layer at 25°C (the tensile elastic modulus (N/m²) of the film at 25°C / the tensile elastic modulus (N/m²) of the elastic layer at 25°C) is 10 or more and 3,000 or less.
(((7))) A fixing device including: a first rotatable member; and a second rotatable member disposed in contact with an outer surface of the first rotatable member,
   wherein at least one of the first rotatable member and the second rotatable member includes the film according to (((6))) disposed thereon.
(((8))) An image forming apparatus including:
   an image holding member;
   a charging device that charges a surface of the image holding member;
   an electrostatic latent image forming device that forms an electrostatic latent image on the charged surface of the image holding member;
   a developing device that houses a developer containing a toner and develops the electrostatic latent image formed on the surface of the image holding member with the developer to thereby form a toner image;
   a transfer device that transfers the toner image onto a surface of a recording medium; and
   the fixing device according to (((7))), the fixing device fixing the toner image to the surface of the recording medium.
(((9))) A transfer device including:
   an intermediate transfer body including the film according to (((6))) and having an outer circumferential surface onto which a toner image is to be transferred;
   a first transfer unit that first-transfers a toner image formed on a surface of an image holding member onto the outer circumferential surface of the intermediate transfer body; and
   a second transfer unit that second-transfers the toner image transferred onto the outer circumferential surface of the intermediate transfer body onto a surface of a recording medium.
(((10))) An image forming apparatus including:
   an image holding member;
   a charging device that charges a surface of the image holding member;
   an electrostatic latent image forming device that forms an electrostatic latent image on the charged surface of the image holding member;
   a developing device that houses a developer containing a toner and develops the electrostatic latent image formed on the surface of the image holding member with the developer to thereby form a toner image;
   the transfer device according to (((9))), the transfer device transferring the toner image onto a surface of a recording medium; and
   a fixing device that fixes the toner image to the surface of the recording medium.

The film according to (((1))) of the disclosure includes the fluorine-free material and can maintain high releasability even after use under repeated heating, in comparison with a film having a peel strength (kPa) from a fixed resin of (A) at 25°C and (B) at 200°C satisfying that (A) is more than 20 kPa or (B - A) is more than 10 kPa.

The film according to (((2))) of the disclosure can maintain high releasability even after use under repeated heating in comparison with a film that does not contain the dendrimer or the compound having the structure A represented by formula: [RSiO_{1.5}]ₙ (in the formula, R represents an organic group, and n represents an integer of 2 or more).

The film according to (((3))) of the disclosure can maintain high releasability even after use under repeated heating in comparison with a film in which the content of the dendrimer or the compound having the structure A is less than 3 parts by mass.

The film according to (((4))) of the disclosure can maintain high releasability even after use under repeated heating in comparison with a film in which the content of the dendrimer or the compound having the structure A is less than 6 parts by mass.

The elastic layer-attached film according to (((5))) of the disclosure has higher flexibility than a film including no elastic layer.

The elastic layer-attached film according to (((6))) of the disclosure can maintain high releasability even after use under repeated heating, in comparison with an elastic layer-attached film in which the ratio of the tensile elastic modulus (N/m²) of the film at 25°C (N/m²) to the tensile elastic modulus (N/m²) of the elastic layer at 25°C (N/m²) (the tensile elastic modulus (N/m²) of the film at 25°C / the tensile elastic modulus (N/m²) of the elastic layer at 25°C) is less than 10 or more than 3,000.

In the fixing device according to (((7))) of the disclosure and the image forming apparatus according to the (((8))) each including the rotatable member including the elastic layer-attached film including the fluorine-free material and in the transfer device according to (((9))) and the image forming apparatus according to (((10))) each including the intermediate transfer body including the elastic layer-attached film including the fluorine-free material, the elastic layer-attached film can maintain high releasability even after use under repeated heating, in comparison with an elastic layer-attached film having a peel strength (kPa) from a fixed resin of (A) at 25°C and (B) at 200°C satisfying that (A) is more than 20 kPa or (B - A) is more than 10 kPa.

## Claims

1. A film comprising a fluorine-free material and having a peel strength (kPa) from a fixed resin of (A) at 25°C and (B) at 200°C satisfying that (A) is 0 kPa or more and 20 kPa or less and (B - A) is 10 kPa or less.

2. The film according to claim 1, wherein the fluorine-free material comprises at least a dendrimer or a compound having a structure A represented by formula: [RSiO_{1.5}]ₙ (wherein, in the formula, R represents an organic group, and n represents an integer of 2 or more).

3. The film according to claim 2, wherein the content of the dendrimer or the compound having the structure A is 3 parts by mass or more.

4. The film according to claim 2, wherein the content of the dendrimer or the compound having the structure A is 6 parts by mass or more.

5. The film according to any one of claims 1 to 4, the film comprising an elastic layer.

6. The film according to claim 5, wherein the ratio of the tensile elastic modulus (N/m²) of the film at 25°C to the tensile elastic modulus (N/m²) of the elastic layer at 25°C (the tensile elastic modulus (N/m²) of the film at 25°C / the tensile elastic modulus (N/m²) of the elastic layer at 25°C) is 10 or more and 3,000 or less.

7. A fixing device comprising:
a first rotatable member; and
a second rotatable member disposed in contact with an outer surface of the first rotatable member,
wherein at least one of the first rotatable member and the second rotatable member includes the film according to claim 6 disposed thereon.

8. An image forming apparatus comprising:
an image holding member;
a charging device that charges a surface of the image holding member;
an electrostatic latent image forming device that forms an electrostatic latent image on the charged surface of the image holding member;
a developing device that houses a developer containing a toner and develops the electrostatic latent image formed on the surface of the image holding member with the developer to thereby form a toner image;
a transfer device that transfers the toner image onto a surface of a recording medium; and
the fixing device according to claim 7, the fixing device fixing the toner image to the surface of the recording medium.

9. A transfer device comprising:
an intermediate transfer body including the film according to claim 6 and having an outer circumferential surface onto which a toner image is to be transferred;
a first transfer unit that first-transfers a toner image formed on a surface of an image holding member onto the outer circumferential surface of the intermediate transfer body; and
a second transfer unit that second-transfers the toner image transferred onto the outer circumferential surface of the intermediate transfer body onto a surface of a recording medium.

10. An image forming apparatus comprising:
an image holding member;
a charging device that charges a surface of the image holding member;
an electrostatic latent image forming device that forms an electrostatic latent image on the charged surface of the image holding member;
a developing device that houses a developer containing a toner and develops the electrostatic latent image formed on the surface of the image holding member with the developer to thereby form a toner image;
the transfer device according to claim 9, the transfer device transferring the toner image onto a surface of a recording medium; and
a fixing device that fixes the toner image to the surface of the recording medium.
